(19) Europäisches Patentamt
European Patent Office
Office européen des brevets

(11) **EP 4 339 623 A1**

(12) **EUROPEAN PATENT APPLICATION**
published in accordance with Art. 153(4) EPC

(43) Date of publication:
**20.03.2024 Bulletin 2024/12**

(51) International Patent Classification (IPC):
**G01P 21/02** (2006.01)   **G01P 3/50** (2006.01)
**G01P 7/00** (2006.01)

(21) Application number: **22807321.9**

(52) Cooperative Patent Classification (CPC):
**G01P 3/50; G01P 7/00; G01P 21/02**

(22) Date of filing: **21.04.2022**

(86) International application number:
**PCT/JP2022/018377**

(87) International publication number:
**WO 2022/239618 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.05.2021 JP 2021082386**

(71) Applicant: **Hitachi, Ltd.**
**Tokyo 100-8280 (JP)**

(72) Inventor: **SATO, Shinnosuke**
**Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **SPEED DETECTING DEVICE, AND SPEED DETECTING METHOD**

(57) In order to solve a problem in which, there is a delay between a time when slip or skid actually occurs and a time when a processing device detects the slip or skid, and thus a part of a rapid change in a wheel rotation number immediately after the occurrence of the slip or skid is taken in as data for speed calculation, resulting in a large speed error, a speed detection device includes: a wheel rotation number detector configured to detect a rotation number of a wheel of a vehicle; an acceleration sensor configured to detect a vehicle acceleration; and a speed calculation unit configured to calculate a vehicle speed. The speed calculation unit includes a detector configured to detect the slip or skid of the wheel, outputs, as the vehicle speed, a wheel speed calculated based on the rotation number of the wheel, and calculates, as an offset value, a difference between the vehicle acceleration and a wheel acceleration calculated based on a time change amount of the wheel speed when the slip or skid of the wheel is not detected by the detector, and corrects the vehicle acceleration using the offset value, and outputs the vehicle speed calculated by integrating a corrected vehicle acceleration when the slip or skid of the wheel is detected by the detector.

FIG. 1

EP 4 339 623 A1

**Description**

Technical Field

The present invention relates to a speed detection device and a speed detection method using an acceleration sensor, and is particularly suitable for detecting a speed of a railway vehicle.

Background Art

In speed calculation for a railway vehicle, a method for calculating a vehicle speed based on a rotation number and a diameter of a wheel is generally used. This method is less likely to be affected by an external environment such as a tunnel or a railway bridge than a GPS speedometer or a Doppler speedometer, and thus the method is a mainstream speed calculation method in this technical field.

Meanwhile, in this method using the rotation number of the wheel, when a friction coefficient between the wheel and a rail is reduced due to rain, a fallen leaf, or the like and the wheel slips or skids, the vehicle speed may not be correctly calculated.

For example, when a brake is applied while the friction coefficient between the wheel and the rail is decreasing, the wheel slides (skids) on the rail, the rotation number decreases, and a speed is calculated lower than an actual speed. When power running is performed while the friction coefficient between the wheel and the rail is decreasing, the wheel slips on the rail, and a speed is calculated higher than the actual speed.

In order to solve this problem, PTL 1 proposes a train speed estimation method during slip or skid using an acceleration sensor.

PTL 1 discloses that "based on a speed output of the speed conversion processing device, an acceleration output of the acceleration correction unit, and a slip or skid determination output of the slip or skid detection unit, the position and speed calculation unit obtains a position of the train based on the acceleration output during the slip or skid and obtains a position and a speed of the train based on the speed output during no slip or skid".

According to this method, it is possible to calculate a correct vehicle speed even when the wheel is slipping or skidding. An acceleration detected by the acceleration sensor includes an error in inclination when the sensor is provided in a vehicle body, an error in a component of a gravitational acceleration in a running direction of the train due to a track gradient, and the like. In PTL 1, these are corrected using track gradient information.

Citation List

Patent Literature

PTL 1: JP2000-121658A

Summary of Invention

Technical Problem

In order to achieve "correcting an influence of the gravity based on a gradient of a running position of the train" ("claim 3" in PTL 1) described in PTL 1, it is necessary to possess highly accurate track gradient information on a vehicle side (or receive the highly accurate track gradient information from a ground side). For this purpose, a detailed track gradient database is required in an entire running section, and there is a problem in which an allowable gradient error becomes stricter when the rail is laid. Therefore, it is difficult to achieve the above from a technical and cost standpoint;

In PTL 1, occurrence of the slip or skid is detected by calculation using an acceleration detection device and a wheel rotation number detection device. However, there is a problem in which,due to a communication time between devices and a processing time of an information processing device, there is a delay between a time when the slip/skid actually occurs and a time when the information processing device detects the slip/skid, and thus a part of a rapid change in a wheel rotation number immediately after the occurrence of the slip/skid is taken in as source data for the speed calculation, resulting in a large speed error.

Accordingly, an object of the invention is to provide a method for correcting an acceleration sensor output with high accuracy without using track gradient information and improving accuracy of a vehicle speed during slip/skid, and to provide an initial speed calculation method in which an initial speed when an acceleration output is integrated at a time of occurring the slip/skid does not include a rapid change in a wheel rotation number immediately after the occurrence of the slip/skid.

Solution to Problem

In order to solve the above problem, typical one of speed detection devices according to the invention includes: a wheel rotation number detector configured to detect a rotation number of a wheel of a vehicle; an acceleration sensor configured to detect a vehicle acceleration; and a speed calculation unit configured to calculate a vehicle speed. The speed calculation unit includes a detector configured to detect slip or skid of the wheel, outputs, as the vehicle speed, a wheel speed calculated based on the rotation number of the wheel, and calculates, as an offset value, a difference between the vehicle acceleration and a wheel acceleration calculated based on a time change amount of the wheel speed when the slip or skid of the wheel is not detected by the detector, and corrects the vehicle acceleration using the offset value, and outputs the vehicle speed calculated by integrating a corrected vehicle acceleration when the slip or skid of the wheel is detected by the detector.

Advantageous Effects of Invention

According to the invention, since the track gradient information is not required for output and correction performed by the acceleration sensor, the detailed track gradient data in the running section is not required. Since the gradient error when the rail is laid no longer affects the speed calculation, it is possible to easily improve speed calculation accuracy at a time of the slip/skid at a low cost.

The problem is solved in which the rapid change in the wheel rotation number immediately after the occurrence of the slip/skid is taken in, and the speed calculation accuracy is improved.

Problems, configurations, and effects other than those described above will become apparent by description of following embodiments.

Brief Description of Drawings

[FIG. 1] FIG. 1 is a block diagram showing a configuration of a speed detection device according to Embodiment 1 in the invention.

[FIG. 2] FIG. 2 is a block diagram showing a configuration of a speed detection device according to Embodiment 2 in the invention.

[FIG. 3] FIG. 3 is a block diagram showing a configuration of a speed detection device according to Embodiment 3 in the invention.

[FIG. 4] FIG. 4 is a block diagram showing a configuration of a speed detection device according to Embodiment 4 in the invention.

[FIG. 5] FIG. 5 is a diagram showing a speed change when skid occurs.

Description of Embodiments

Hereinafter, Embodiments 1 to 4 in the invention will be described in detail as embodiments with reference to drawings. In the drawings, the same parts are denoted by the same reference signs.

[Embodiment 1]

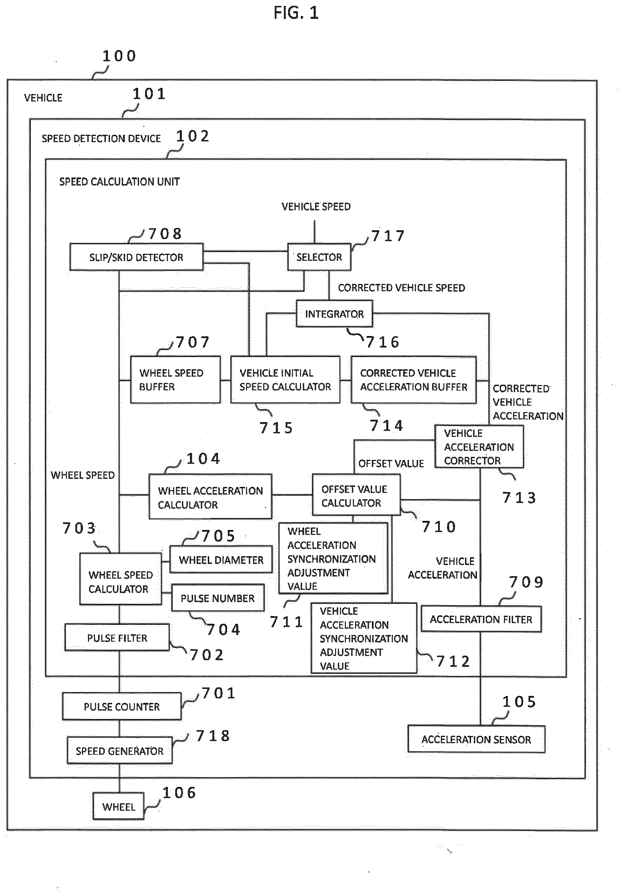

FIG. 1 is a block diagram showing a configuration of a speed detection device (101) according to Embodiment 1 in the invention. The speed detection device (101) is mounted on a vehicle (100).

A speed detection device (101) includes a speed generator (718) that converts a rotation number of a wheel (106) into a pulse signal, a pulse counter (701) that counts the number of the pulse signals from the speed generator (718), an acceleration sensor (105) that measures an acceleration during running, and a speed calculation unit (102) that calculates a vehicle speed based on an output of the pulse counter (701) and an output of the acceleration sensor (105).

The speed calculation unit (102) includes the following components.

An input side is provided with a pulse filter (702) that smooths an output value of the pulse counter (701) and an acceleration filter (709) that smooths an output value of the acceleration sensor (105) and that outputs a vehicle acceleration.

In relation to a wheel speed, a wheel speed calculator (703) that calculates the wheel speed based on an output of the pulse filter (702), a wheel diameter (705), and a pulse number (704) generated per rotation of the wheel (106), a wheel acceleration calculator (104) that calculates a wheel acceleration based on a change amount in the wheel speed per unit time, a wheel speed buffer (707) that holds a past value of the wheel speed, and a slip/skid detector (708) that detects slip/skid of the wheel (106) based on a time change rate of the wheel speed are provided.

In relation to the vehicle acceleration, an offset value calculator (710) that calculates an offset value based on a difference between a wheel acceleration received in the past in a time set in a wheel acceleration synchronization adjustment value (711) and a vehicle acceleration received in the past in a time set in a vehicle acceleration synchronization adjustment value (712), a vehicle acceleration corrector (713) that calculates a corrected vehicle acceleration by adding the offset value to the vehicle acceleration, and a corrected vehicle acceleration buffer (714) that holds a past value of the corrected vehicle acceleration are provided.

A vehicle initial speed calculator (715) that calculates, according to an output of the slip/skid detector (708), the vehicle speed when the slip/skid occurs based on information held in the wheel speed buffer (707) and the corrected vehicle acceleration buffer (714), an integrator (716) that integrates the corrected vehicle acceleration based on a vehicle initial speed to calculate a corrected vehicle speed, and a selector (717) that selects one of the wheel speed and the corrected vehicle speed according to the output of the slip/skid detector (708) and that outputs the selected one as the vehicle speed are further provided.

At this time, the vehicle initial speed calculator (715) calculates the vehicle initial speed by integrating the corrected vehicle acceleration from a past predetermined time to a time when the slip/skid is detected based on the wheel speed in the past predetermined time from the time when the slip/skid is detected.

According to Embodiment 1, the wheel speed based on the rotation number of the wheel (106) is used as the vehicle speed when no slip/skid occurs, and the corrected vehicle speed obtained by integrating the corrected vehicle acceleration based on the output of the acceleration sensor (105) is used as the vehicle speed when the slip/skid occurs. Therefore, it is possible to calculate a correct vehicle speed even when the slip/skid occurs.

According to Embodiment 1, the vehicle initial speed at the time when the slip/skid is detected is calculated using the past speed and the past acceleration before the occurrence of the slip/skid. Therefore, it is possible to perform speed correction that includes the wheel speed changed during a delay time from when the slip/skid actually occurs to when the slip/skid is detected, and it is possible to calculate a more accurate vehicle speed.

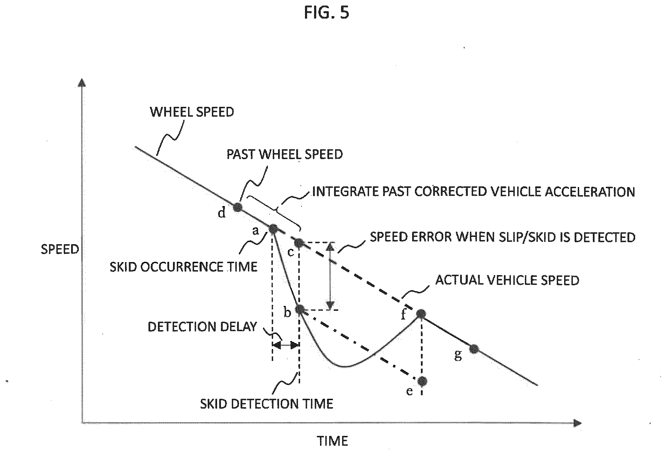

As an example, the delay time and speed accuracy from the occurrence of the skid to the detection will be described with reference to FIG. 5. FIG. 5 is a diagram showing a speed change when the skid occurs.

Since the rotation number of the wheel (106) decreases at a skid occurrence time (a), change in wheel speeds after the occurrence time is represented by values (points d, a, b, f, g) indicated by a solid line in the drawing. Meanwhile, actual vehicle speeds are values (points d, a, c, f, g) indicated by a broken line in the drawing.

At this time, when the vehicle initial speed is not calculated, the vehicle initial speed when the skid is detected is represented by the point b, and thus when the acceleration during the skid is integrated, the vehicle speed becomes values (points d, a, b, e, f, g) indicated by a dashed line, and greatly deviates from the actual vehicle speed.

Meanwhile, when the vehicle initial speed is calculated, the acceleration from the point d to the point c is integrated based on a speed at the point d which is a wheel speed in a past predetermined time from a time when the skid is detected, and thus the initial speed can be correctly calculated.

The output of the acceleration sensor (105) includes components that are not related to the vehicle acceleration, such as a track gradient and an installation angle error of the acceleration sensor (105). Accordingly, a difference between the wheel acceleration and the vehicle acceleration when no slip/skid occurs is calculated as an offset value, and it is possible to remove the components that are not related to the vehicle acceleration by adding the offset value when the slip/skid occurs to the vehicle acceleration and performing correction.

In the offset value calculation at this time, since the wheel acceleration and the vehicle acceleration are received from different transmission paths, these pieces of information are not synchronized. That is, since both are data measured at different times, an error occurs when the offset value is directly calculated.

In order to solve this problem, in Embodiment 1, the wheel acceleration synchronization adjustment value (711) and the vehicle acceleration synchronization adjustment value (712) are provided, and the offset value is calculated using the past wheel acceleration and the past vehicle acceleration in the time set in these adjustment values. Accordingly, since the offset value can be calculated using the rotation number of the wheel (106) and the output of the acceleration sensor (105) that are measured at the same time, accuracy of the offset value is improved.

The rotation number of the wheel (106) and the output of the acceleration sensor (105) include a quantization error in the measurement, vibration caused by vehicle running, and the like, but it is possible to prevent influence of the errors by providing a filter for each signal. In addition, by appropriately setting filter parameters, response characteristics of the wheel acceleration and the vehicle acceleration based on different information sources are matched, and the accuracy of the offset value is improved.

In the configuration shown in FIG. 1, only one speed generator (718), only one acceleration sensor (105), and the like are shown. Alternatively, a plurality of these elements may be provided. By providing a plurality of these elements, it is possible to reduce redundancy and the error in each element. The speed generator (718) may be a non-power supply type speed generator or a power supply type pulse generator.

[Embodiment 2]

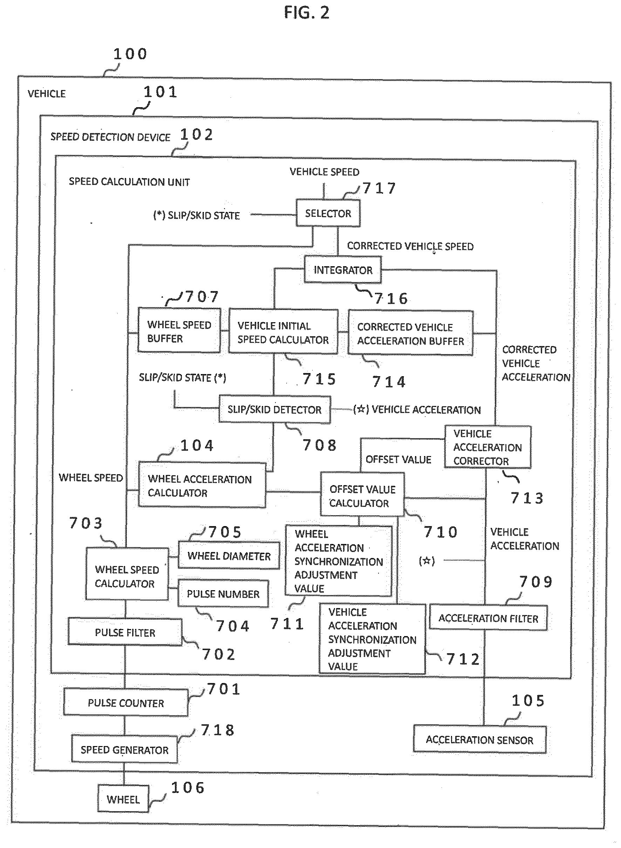

FIG. 2 is a block diagram showing a configuration of the speed detection device (101) according to Embodiment 2 in the invention. Hereinafter, a difference from the configuration of the speed detection device (101) according to Embodiment 1 will be described, and description of the same components as those in Embodiment 1 will be omitted.

The slip/skid detector (708) in Embodiment 2 is different from that in Embodiment 1 in that, in Embodiment 1, the slip/skid detector (708) detects the slip/skid of the wheel (106) based on the time change rate of the wheel speed, whereas in Embodiment 2, the slip/skid detector (708) receives the wheel acceleration and the corrected vehicle acceleration and detects the slip/skid based on a comparison result between the two.

The vehicle initial speed calculator (715) calculates the vehicle initial speed based on a signal indicating the slip/skid state from the slip/skid detector (708). The selector (717) selects one of the wheel speed and the corrected vehicle speed. This point is the same as in Embodiment 1.

According to Embodiment 2, since the slip/skid is detected based on the output of the acceleration sensor (105) in addition to the wheel speed, it is possible to detect the slip/skid more accurately. The output of the acceleration sensor (105) and the wheel speed are information sources used for determining the slip/skid.

In Embodiment 2, the slip/skid is detected based on the comparison result between the wheel acceleration and the corrected vehicle acceleration, but the signals to be compared are not limited to these. For example, the slip/skid may be detected based on a speed comparison result between the wheel speed and the corrected vehicle speed.

The detection for the end of the slip/skid may be determined based on a signal different from the detection for the occurrence of the slip/skid. For example, the occurrence of the slip/skid is determined based on the change rate of the wheel speed as in Embodiment 1, and the end of the slip/skid is determined based on the above comparison result between the corrected vehicle speed and the wheel speed.

In the above description, Embodiment 2 has been described in a manner in which a change is added to the configuration of the speed detection device (101) according to Embodiment 1. Embodiment 2 can also be applied to configurations of the speed detection device (101) according to Embodiment 3 or Embodiment 4 which will be described below.

[Embodiment 3]

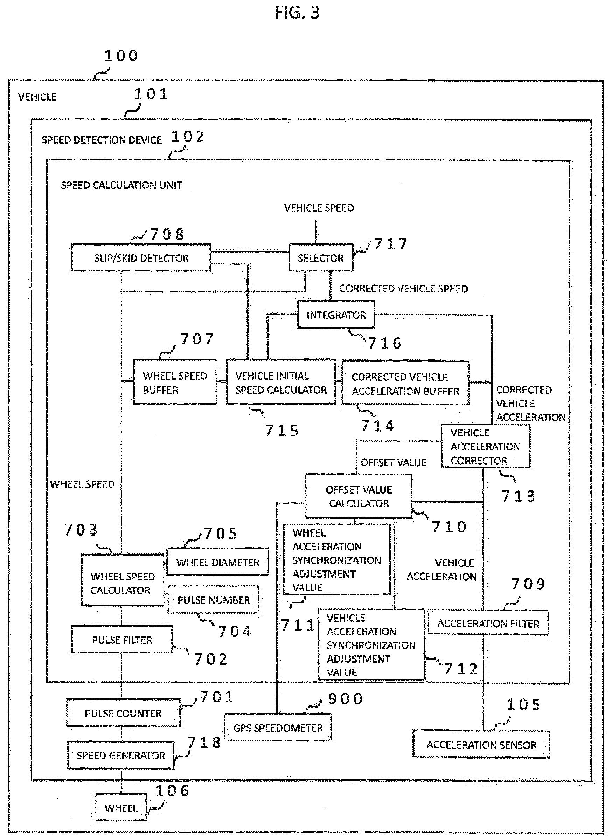

FIG. 3 is a block diagram showing the configuration of the speed detection device (101) according to Embodiment 3 in the invention. Hereinafter, a difference from the configuration of the speed detection device (101) according to Embodiment 1 will be described, and description of the same components as those in Embodiment 1 will be omitted.

Embodiment 3 is different from Embodiment 1 in that, in Embodiment 3, a GPS speed is used as a reference speed source for the correction of the vehicle acceleration.

The offset value calculator (710) receives the GPS speed from a GPS speedometer (900) newly provided in the speed detection device 101 in Embodiment 3, calculates a GPS acceleration by differentiating the GPS speed, and calculates the offset value based on a difference between the GPS acceleration and the vehicle acceleration.

According to Embodiment 3, since the wheel speed is not used in the calculation of the offset value, it is possible to calculate the corrected vehicle acceleration and the corrected vehicle speed even when the wheel slips or skids for a long time, for example, in a slip state for a long time that may occur when a locomotive starts running. Accordingly, it is possible to calculate the correct vehicle speed using the acceleration sensor even when the vehicle is in a slip state for a long time.

In Embodiment 3, the GPS speedometer is described as an example, and besides this, any third speed detector other than the speed generator or the acceleration sensor, such as a Doppler speedometer or a millimeter wave radar, can be adopted.

In the above description, Embodiment 3 has been described in a manner in which a change is added to the configuration of the speed detection device (101) according to Embodiment 1. Embodiment 3 can also be applied to configurations of the speed detection device (101) according to Embodiment 2 or Embodiment 4 which will be described below.

[Embodiment 4]

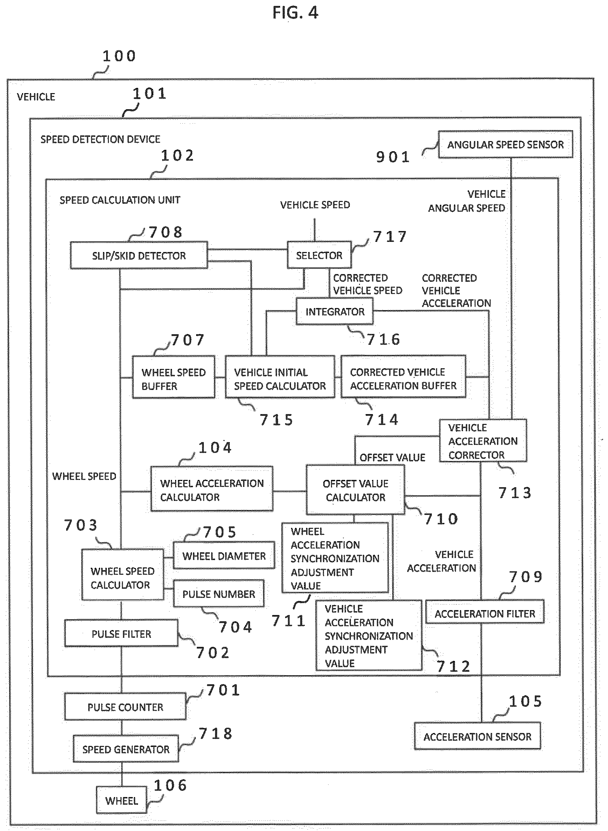

FIG. 4 is a block diagram showing a configuration of the speed detection device (101) according to Embodiment 4 in the invention. Hereinafter, a difference from the configuration of the speed detection device (101) according to Embodiment 1 will be described, and description of the same components as those in Embodiment 1 will be omitted.

Embodiment 4 is different from Embodiment 1 in that, in Embodiment 4, the vehicle acceleration is corrected using information from an angular speed sensor. In addition to the configuration of the speed detection device (101) according to Embodiment 1, an angular speed sensor (901) that measures an angular speed (hereinafter referred to as "vehicle angular speed") in a pitch direction of the vehicle (100) is provided.

The vehicle acceleration corrector 713 corrects the vehicle acceleration using the vehicle angular speed and the offset value from the offset value calculator 710.

More specifically, an angular change amount (Δθ) in the pitch direction of the vehicle (100) that is slipping or skidding is calculated based on the vehicle angular speed, and the corrected vehicle acceleration is calculated by the following (Formula 1) using the gravitational acceleration (g).

```
Corrected  vehicle  acceleration  =  vehicle  acceleration  +
```

```
offset value - g · Δθ  (Formula 1)
```

According to Embodiment 4, even when the track gradient changes during the slip/skid, an offset amount of the vehicle acceleration, which is increased or decreased due to the gradient change, can be canceled out. Therefore, it is possible to calculate the correct vehicle speed.

In the above description, Embodiment 4 has been described in a manner in which a change is added to the configuration of the speed detection device (101) according to Embodiment 1. Embodiment 4 can also be applied to configurations of the speed detection device (101) according to Embodiment 2 or Embodiment 3.

FIG. 4 shows a configuration example in which the vehicle acceleration corrector (713) corrects the vehicle acceleration using the vehicle angular speed, and besides this, the same effect can be attained even in a configuration in which the offset value calculator (710) corrects the offset value using the vehicle angular speed.

Further, (Formula 1) for calculating the corrected vehicle acceleration shown in Embodiment 4 is a simple calculation formula assuming that an absolute value of inclination in the pitch direction of the vehicle (100) is always small. However, the calculation formula for achieving Embodiment 4 is not limited to (Formula 1).

Although Embodiments 1 to 4 have been described as the embodiments in the above description, the invention is not limited to the above embodiments, and various modifications can be made without departing from the gist of the invention.

Reference Signs List

| | |
|---|---|
| 100: | vehicle |
| 101: | speed detection device |
| 102: | speed calculation unit |
| 105: | acceleration sensor |
| 106: | wheel |
| 701: | pulse counter |
| 702: | pulse filter |
| 703: | wheel speed calculator |
| 704: | pulse number |
| 705: | wheel diameter |
| 707: | wheel speed buffer |
| 708: | slip/skid detector |
| 709: | acceleration filter |
| 710: | offset value calculator |
| 711: | wheel acceleration synchronization adjustment value |
| 712: | vehicle acceleration synchronization adjustment value |
| 713: | vehicle acceleration corrector |
| 714: | corrected vehicle acceleration buffer |
| 715: | vehicle initial speed calculator |
| 716: | integrator |
| 717: | selector |
| 718: | speed generator |
| 900: | GPS speedometer |
| 901: | angular speed sensor |

Claims

1.  A speed detection device comprising:

    a wheel rotation number detector configured to detect a rotation number of a wheel of a vehicle;
    an acceleration sensor configured to detect a vehicle acceleration; and
    a speed calculation unit configured to calculate a vehicle speed, wherein
    the speed calculation unit

    includes a detector configured to detect slip or skid of the wheel,
    outputs, as the vehicle speed, a wheel speed calculated based on the rotation number of the wheel, and
    calculates, as an offset value, a difference between the vehicle acceleration and a wheel acceleration
    calculated based on a time change amount of the wheel speed when the slip or skid of the wheel is not
    detected by the detector, and
    corrects the vehicle acceleration using the offset value, and outputs the vehicle speed calculated by integrating a corrected vehicle acceleration when the slip or skid of the wheel is detected by the detector.

2.  The speed detection device according to claim 1, wherein
    a past wheel acceleration and a past vehicle acceleration in a set time are used for the calculation of the offset value
    performed by the speed calculation unit.

3.  The speed detection device according to claim 1 or 2, wherein
    the detector detects the slip or skid of the wheel based on a time change rate of the wheel speed or a comparison
    result between the wheel acceleration and the vehicle acceleration.

4.  The speed detection device according to claim 3, wherein
    the detector detects end of the slip or skid of the wheel based on a comparison result between the wheel speed
    and the vehicle speed calculated by integrating the corrected vehicle acceleration.

5.  The speed detection device according to any one of claims 1 to 4, wherein
    the speed calculation unit includes:

    a first buffer configured to hold a past value of the wheel speed; and
    a second buffer configured to hold a past value of the corrected vehicle acceleration, and
    the speed calculation unit integrates the corrected vehicle acceleration for a vehicle initial speed when the slip
    or skid of the wheel is detected, the vehicle initial speed being calculated using the value held by the first buffer
    and the value held by the second buffer.

6.  The speed detection device according to any one of claims 1 to 5, further comprising:

    a speed detector configured to measure the vehicle speed, the speed detector being, different from the wheel
    rotation number detector and the acceleration sensor, wherein
    the speed calculation unit replaces the wheel acceleration used to calculate the offset value with the wheel
    speed calculated based on the rotation number of the wheel, and uses a time change amount of the vehicle
    speed measured by the speed detector.

7.  The speed detection device according to any one of claims 1 to 6, further comprising:

    an angular speed sensor configured to detect an angular speed in a pitch direction of the vehicle, wherein
    the speed calculation unit corrects the vehicle acceleration using the offset value and the angular speed.

8.  A speed detection method for detecting a vehicle speed using a wheel rotation number detector and an acceleration
    sensor, the speed detection method comprising:

    a first step of detecting occurrence of slip or skid of a wheel of a vehicle;
    a second step of calculating a wheel speed based on a rotation number of the wheel detected by the wheel
    rotation number detector;
    a third step of calculating, as an offset value, a difference between a vehicle acceleration detected by the acceleration sensor and a wheel acceleration calculated based on a time change amount of the wheel speed;
a fourth step of correcting the vehicle acceleration detected by the acceleration sensor using the offset value; and
a fifth step of calculating the. vehicle speed by integrating a corrected vehicle acceleration, wherein
the wheel speed calculated in the second step is adopted as the vehicle speed when occurrence of the slip or skid of the wheel is not detected in the first step, and
the vehicle speed calculated in the fifth step is adopted when the occurrence of the slip or skid of the wheel is detected in the first step.

9. The speed detection method according to claim 8, wherein
a past vehicle acceleration and a past wheel acceleration in a set time are used for the calculation of the offset value in the third step.

10. The speed detection method according to claim 8 or 9, wherein
in the first step, the slip or skid of the wheel is detected based on a time change rate of the wheel speed or a comparison result between the wheel acceleration and the vehicle acceleration.

11. The speed detection method according to any one of claims 8 to 10, wherein
in the fifth step, the corrected vehicle acceleration is integrated for a vehicle initial speed when the slip or skid of the wheel is detected, the vehicle initial speed being calculated using a past value of the wheel speed and a past value of the corrected vehicle acceleration.

12. The speed detection method according to any one of claims 8 to 11, wherein
in the third step, the wheel acceleration used to calculate the offset value is replaced with the wheel speed calculated based on the rotation number of the wheel, and the vehicle speed measured by a speed detector that is different from the wheel rotation number detector and the acceleration sensor is adopted.

13. The speed detection method according to any one of claims 8 to 12, wherein
in the fourth step, the vehicle acceleration is corrected using the offset value and an angular speed in a pitch direction of the vehicle detected by an angular speed sensor.

FIG. 1

## FIG. 2

## FIG. 3

100

VEHICLE    101

SPEED DETECTION DEVICE   102

SPEED CALCULATION UNIT

VEHICLE SPEED

708
SLIP/SKID DETECTOR

717
SELECTOR

CORRECTED VEHICLE SPEED

INTEGRATOR

716

707
WHEEL SPEED BUFFER

VEHICLE INITIAL SPEED CALCULATOR

CORRECTED VEHICLE ACCELERATION BUFFER

CORRECTED VEHICLE ACCELERATION

715

714

VEHICLE ACCELERATION CORRECTOR

OFFSET VALUE

OFFSET VALUE CALCULATOR

713

WHEEL SPEED

710

703

705
WHEEL DIAMETER

WHEEL ACCELERATION SYNCHRONIZATION ADJUSTMENT VALUE

VEHICLE ACCELERATION

709

WHEEL SPEED CALCULATOR

PULSE NUMBER

711
VEHICLE ACCELERATION SYNCHRONIZATION ADJUSTMENT VALUE

ACCELERATION FILTER

PULSE FILTER

704

712

702

701
PULSE COUNTER

900
GPS SPEEDOMETER

105

718
SPEED GENERATOR

ACCELERATION SENSOR

106
WHEEL

11

FIG. 4

FIG. 5

## INTERNATIONAL SEARCH REPORT

| International application No. |
| --- |
| **PCT/JP2022/018377** |

**A.    CLASSIFICATION OF SUBJECT MATTER**

*G01P 21/02*(2006.01)i; *G01P 3/50*(2006.01)i; *G01P 7/00*(2006.01)i
FI:    G01P21/02; G01P3/50; G01P7/00

According to International Patent Classification (IPC) or to both national classification and IPC

**B.    FIELDS SEARCHED**

Minimum documentation searched (classification system followed by classification symbols)

G01P3/00-3/80; G01P7/00-11/02; G01P21/00-21/02; B60L1/00-3/12; B60L7/00-13/00; B60L15/00-58/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2017-147825 A (KABUSHIKI KAISHA TOSHIBA) 24 August 2017 (2017-08-24) entire text, all drawings | 1-13 |
| A | JP 2013-205248 A (RAILWAY TECHNICAL RESEARCH INSTITUTE) 07 October 2013 (2013-10-07) entire text, all drawings | 1-13 |
| A | JP 2000-97967 A (JAPAN AVIATION ELECTRONICS INDUSTRY LTD.) 07 April 2000 (2000-04-07) entire text, all drawings | 1-13 |
| A | JP 11-326358 A (MITSUBISHI JIDOSHA KOGYO KABUSHIKI KAISHA) 26 November 1999 (1999-11-26) entire text, all drawings | 1-13 |
| A | US 2013/0320153 A1 (LSIS CO., LTD.) 05 December 2013 (2013-12-05) entire text, all drawings | 1-13 |
| A | CN 109664922 A (TRAFFIC CONTROL TECH CO., LTD.) 23 April 2019 (2019-04-23) entire text, all drawings | 1-13 |

☐ Further documents are listed in the continuation of Box C.      ☑ See patent family annex.

| | |
| --- | --- |
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **01 July 2022** | **12 July 2022** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

## INTERNATIONAL SEARCH REPORT
### Information on patent family members

International application No.

**PCT/JP2022/018377**

| Patent document cited in search report | | | Publication date (day/month/year) | Patent family member(s) | | Publication date (day/month/year) |
|---|---|---|---|---|---|---|
| JP | 2017-147825 | A | 24 August 2017 | (Family: none) | | |
| JP | 2013-205248 | A | 07 October 2013 | (Family: none) | | |
| JP | 2000-97967 | A | 07 April 2000 | (Family: none) | | |
| JP | 11-326358 | A | 26 November 1999 | (Family: none) | | |
| US | 2013/0320153 | A1 | 05 December 2013 | CN 103454442 KR 10-2013-0133414 | A A | |
| CN | 109664922 | A | 23 April 2019 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000121658 A